# EUROPÄISCHE PATENTSCHRIFT

(11) **EP 1 675 696 B1**
(45) Veröffentlichungstag und Bekanntmachung des Hinweises auf die Patenterteilung: **17.12.2008**
(21) Anmeldenummer: 04764122.0
(22) Anmeldetag: 13.08.2004
(51) Int. Cl.: B21D 26/02, G01M 3/28

(54) **VERFAHREN ZUR EINSTELLUNG SPEZIFISCHER QUALITÄTSMERKMALE UND -EIGENSCHAFTEN VON ROHREN MITTELS DRUCKPRÜFUNG**
METHOD FOR ADJUSTING SPECIFIC QUALITY CHARACTERISTICS AND PROPERTIES OF PIPES BY MEANS OF A PRESSURE TEST
PROCEDE PERMETTANT D'AJUSTER DES CARACTERISTIQUES ET PROPRIETES DE QUALITE SPECIFIQUES POUR DES TUYAUX A L'AIDE D'ESSAIS DE PRESSION

(30) Priorität: 25.10.2003 DE 10350279
(43) Veröffentlichungstag der Anmeldung: 05.07.2006
(73) Patentinhaber: Bender- Ferndorf Rohr GmbH, 57223 Kreuztal-Ferndorf (DE)
(72) Erfinder: THOMALLA, Siegfried, 57271 Hilchenbach (DE); SCHMECK, Franz-Josef, 57258 Freudenberg (DE); DE LA CAMP, Hans-Joachim, 82194 Gröbenzell (DE)
(74) Vertreter: Valentin, Ekkehard
(86) Internationale Anmeldenummer: PCT/EP2004/009128
(87) Internationale Veröffentlichungsnummer: WO 2005/046904

(56) Entgegenhaltungen:
- DE-A- 10 241 641
- US-A- 1 879 009
- US-A- 2 667 136
- US-A- 3 030 901
- US-A- 4 364 251
- US-B1- 6 601 423
- NORMENAUSSCHUSS EISEN UND STAHL: "Stahlrohre für Rohrleitungen für brennbare Medien / Technische Lieferbedingungen / Teil 2" August 1996 (1996-08), DIN EN 10208-2 , BERLIN , XP008040770 * Seite 23, rechte Spalte - Seite 24, linke Spalte; Tabelle 5 *

## Beschreibung

Die Erfindung betrifft ein Verfahren zur Einstellung spezifischer Qualitätsmerkmale und / oder -eigenschaften von Rohren mittels Druckprüfung, insbesondere Stahlrohren für Rohrleitungen für brennbare Medien.

Das US-Patent US 2 667 136 A offenbart eine Vorrichtung, mit der die Enden eines Rohres aufgeweitet und das Rohr selbst gedehnt wird. Zum Dehnen bzw. Expandieren des Rohres wird das Rohr mit Wasser und Luft gefüllt und nachfolgend wird (zusätzliches) Wasser unter Hochdruck in das Rohr eingebracht, um eine gewünschte Ausdehnung des Rohres gegen die Innenwände einer zylindrischen Ummantelung des Rohres zu erreichen.

Das US-Patent US 1 879 009 A betrifft eine Vorrichtung zum Endbearbeiten und Prüfen von Rohrprodukten. Es wird dort beschrieben, das zu prüfende Rohr in einen relativ harten (formsteifen) Zylinder einzubringen und mit einem Druck zu beaufschlagen, so dass sich das Rohr aufweitet und an die Innenseite des Formstreiferizylinders anlegt und auf diese Weise plastisch verformt.

Das US-Patent US 6 601 423 B1 offenbart ein Verfahren zur Wiederherstellung eines runden Querschnitts bei einem Rohr nach dessen Krümmung. Dazu wird das gekrümmte Rohr fest eingespannt und mit einem steigenden Innendruck so lange beaufschlagt, bis sich eine plastische Deformation des gekrümmten Rohres mit einem kreisförmigen Querschnitt einstellt. Das Verfahren betrifft lediglich Kleinstrohre.

Schließlich ist aus der deutschen Offenlegungsschrift DE 102 41 641 A1 ein Verfahren und eine Vorrichtung zum Umformen von Rohren bekannt. Die Rohre werden mittels eines in deren Inneren erzeugten hydraulischen Druckes beaufschlagt, um bei dem Rohr einen gewünschten vergrößerten Außendurchmesser oder eine gewünschte verringerte Länge bzw. Wandstärke einzustellen.

Für die Beförderung von brennbaren Medien wie beispielsweise Erdgas oder Erdöl werden über große Entfernungen Rohrleitungen (Fernleitungen, Pipeline) überirdisch oder unterirdisch verlegt. Die dabei verwendeten Stahlrohre besitzen aktuell, abhängig von den beabsichtigten Durchflussmengen, einen Durchmesser von bis zu 1800 mm.

Zum Einsatz kommen nahtlose (S-) Rohre, hochfrequenzgeschweisste (HFW-) Rohre, unterpulvergeschweisste (SAW-) Rohre oder Stahlrohre, die mit Hilfe eines kombinierten Schutzgas- und Unterpulverschweißverfahrens hergestellt werden (COW-Rohre).

Bei den unterpulvergeschweissten Rohren wird nach Rohren mit Längsnaht (SAWL) oder nach Rohren mit einer Spiralnaht (SAWH) unterschieden.

Die technischen Lieferbedingungen für derartige Stahlrohre sind zurzeit in der DIN EN 10208 Teil 2 festgelegt. Gemäß Absatz 8.2.3.8 ist ein Innendruckversuch mit Wasser durchzuführen. Zweck dieses Innendruckversuches ist es, festzustellen, ob das Rohr den entsprechend DIN EN 10208 Teil 2 gewährleisteten Festigkeitsanforderungen entspricht und dem hydrostatischen Prüfdruck standhält. Die Höhe des hydrostatischen Prüfdruckes ist von der Art der Prüfeinrichtung, des Rohrwerkstoffes, des Rohrdurchmessers und der Rohrwanddicke abhängig.

Zur Herstellung von Rohrleitungen werden die oben beschriebenen Stahlrohre, unter Berücksichtigung unterschiedlicher Längen, zusammengeschweisst. Nach der Fertigstellung werden diese Rohrleitungen, welche zum Befördern gefährdender Flüssigkeiten oder Gasen unter hohen Drücken vorgesehen sind, einem Stresstest unterzogen. Stresstests sind Wasserdruckprüfungen mit Beanspruchungen der Rohre und Rohrbogen bis an den Bereich der tatsächlichen Streckgrenze der Rohre - bei ausreichendem Abstand zur Bruchfestigkeit - unter Beachtung der zulässigen integralen plastischen Verformung der Rohrleitung.

Das VdTÜV Merkblatt 1060 (Rohrleitungen) enthält Hinweise für die Anwendung und die Durchführung des Stresstests.

Nachteilig bei dieser zeitlichen Arbeitsfolge, Herstellung des Rohres im Herstellerwerk, Druckprüfung nach DIN EN 10208 Teil im Herstellerwerk, Transport der Rohre zum Verlegeort, Zusammenschweißen der Rohre und Durchführung des Stresstestes nach VdTÜV - Merkblatt 1060, ist, dass sich das Rohr während des Stresstests plastisch verformen kann und bereits bei der Herstellung der Rohre vorhandene Fehler wie Risse oder dgl. erst jetzt, in einem zusammengeschweißten Rohrstrang, ermittelt werden. Diese Arbeitsfolge führt bei einem Fehler, welcher erst beim Stresstest auftritt, zu einer zeitaufwändigen und teuren Reparatur der Rohrleitung.

Der Erfindung liegt daher die Aufgabe zugrunde, den Stresstest vor Ort zu reduzieren und die Qualitätsmerkmale und / oder -eigenschaften der Rohre zu verbessern.

Diese Aufgabe wird erfindungsgemäß mit einem Verfahren mit den im Anspruch 1 angegebenen Merkmalen gelöst.

Durch die geringfügige Beanspruchung des Rohres in den plastischen Bereich bereits im Herstellerwerk, im Anschluss an die Druckprobe gemäß DIN EN 10208 Teil2, wird der Aufwand, welcher bei einem Stresstest auf dem Verlegeort bei der Rohrleitung anfällt, deutlich reduziert und das Risiko, ein fehlerhaftes Rohr an die Rohrleitung anzuschweissen, minimiert.

Dadurch, dass die plastische Verformung der einzelnen Rohre bereits bei der Herstellung im Herstellerwerk durchgeführt wird, wird ein im Hinblick auf diese Änderung vorbehandeltes Rohr zum Verlegeort gebracht.

Bei der nach der Erfindung vorgenommenen Innenexpandierung erfolgt weiterhin:
- eine Optimierung der Kreisform, woraus ein geringerer Kantenversatz resultiert;
- ein Abbau von Eigenspannungen,
- eine Reduzierung der Streuung der Streckgrenze über die gesamte Rohrliefung durch Anhebung der tatsächlichen Streckgrenzen der Rohre mit niedrigen K x S - Werten, wodurch ein höherer ertragbarer Lastwechsel erreicht wird;
- optimales Verhalten der Rohre bei der Wasserdruckprüfung im Feld ( = Stresstest ), da die nach der Erfindung gefertigten Rohre in der Rubrik "nicht expandierte Rohre mit Entspannungsnachweis" entsprechend VdTÜV - Merkblatt Rohrleitungen 1060 eingeordnet werden;
- eine Reduzierung von Spannungsspitzen im Bereich von Formabweichungen (Aufdachung, Abflachung ...);
- der Außendurchmesser der Rohre wird durch das zusätzliche Wasservolumen um 2 bis 3 Promille vergrößert;
- Belastung der Rohre bei der modifizierten Werkswasserdruckprüfung in der Regel höher als beim Stresstest bei der Errichtung der Rohrleitung;
- größere Höhenunterschiede, welche bei der Verlegung der Rohrleitungen im Gelände auftreten, können während der Druckprüfung überwunden werden;
- Ausnutzung des nach VdTÜV - Merkblatt 1060 zulässigen Wasservolumens für die Kaltverfestigung der Rohre in einer Rohrleitung beim Stresstest ist für Formabweichungen bei Verwendung der erfindungsgemäßen Rohre nicht notwendig, wodurch höhere Prüfdrücke ermöglicht werden, besonders im Hinblick auf spätere Druckerhöhungen in der Rohrleitung im Betrieb.

Ausführungsbeispiele der Erfindung werden anhand von sehr schematischen Zeichnungen näher beschrieben. Es zeigen:

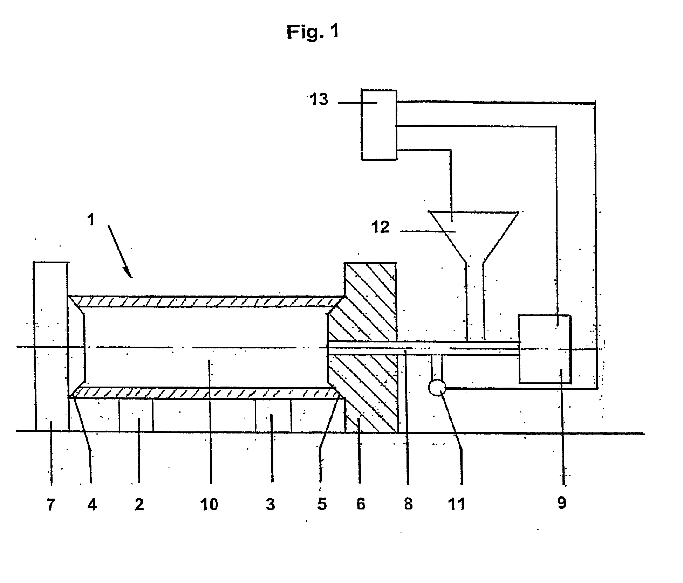

- Figur 1: eine Rohrprüfvorrichtung in Seitenansicht in Teilschnitt.

In Fig. 1 ist ein Rohr 1 dargestellt, welches einer Innendruckprüfung unterzogen wird. Hierzu wird das Rohr 1 auf zwei Lagerstellen 2, 3 aufgelegt und an den beiden Enden 4, 5 mit kegeligen Spannelementen 6, 7 verschlossen. Durch eine Öffnung 8 im Spannelement 6 wird mit einer Pumpe 9 Wasser in das Innere 10 des Rohres 1 gepumpt und das Rohr 1 einer hydrostatischen Druckprobe unterzogen.
Der bei der Druckprobe zu berücksichtigende Druck, der sich an den tatsächlichen statistisch ermittelten K x S - Werten orientiert, wird mit einer Messvorrichtung 11 kontrolliert und / oder eingestellt. Nach Erreichen des vorgegebenen Prüfdruckes wird dieser eine Zeitlang konstant gehalten.

Zur Einstellung spezifischer Qualitätsmerkmale und / oder - eigenschaften wird im Anschluss daran eine vorher berechnete, zusätzliche Wassermenge 12 in das Rohr 1 gepumpt. Der Pumpvorgang für die zusätzliche Wassermenge 12 erfolgt über einem Zeitraum von mehreren Minuten. Je nach Ausführung des Rohres und abhängig von Rohrwanddicke, Rohrlänge, Rohrdurchmesser sowie den Materialeigenschaften sind für den Pumpvorgang 3 bis 10 min zu berücksichtigen.

Zur Ermittlung der Materialeigenschaften wird das Vormaterial der Stahlrohre einem Zugversuch unterzogen. Weiterhin werden die Werte, welche vom Walzwerk beigefügt sein müssen, berücksichtigt.

Durch die Zuführung dieser zusätzlichen Wassermenge 12 über einen vorgegebenen Zeitraum wird eine plastische Verformung des Rohres 1 erzielt.
Um dem Rohr 1 eine plastische Verformung zu ermöglichen, kann auch eine Verweilzeit der gesamten Wassermenge in dem Rohr 1 berücksichtigt werden. Diese zusätzliche Verweilzeit kann vorher bei einem Versuchsrohr ermittelt werden oder bei Beginn der Produktion bei den ersten Rohren einer Serie festgelegt werden.

Sämtliche Angaben zum hergestellten Rohr, den Ergebnissen der Druckprobe, der zusätzlichen Wassermenge, der Pumpzeit, der Verweilzeit usw. werden in einem angeschlossenen Rechner 13 aufgezeichnet und dokumentiert.

## Patentansprüche

1. Verfahren zur Einstellung spezifischer Qualitätsmerkmale und / oder- eigenschaften bei einem Stahlrohr (1) mittels Druckprüfung, umfassend folgende Schritte:
- Pumpen von Wasser in das Innere des Stahlrohres (1);
- Durchführen einer hydrostatische Druckprobe nach DIN EN 10208 Teil 2 mit dem eingepumpten Wasser; und
- Pumpen eines vorbestimmten zusätzlichen Wasservolumens (12) in das Stahlrohr (1) im Anschluss an die hydrostatische Druckprobe, wodurch das Stahlrohr geringfügig in den plastischen Bereich beansprucht wird.

2. Verfahren nach Anspruch 1, **dadurch gekennzeichnet,**
**dass** das Stahlrohr für Rohrleitungen für brennbare Medien geeignet ist.

3. Verfahren nach einem der vorangegangenen Ansprüche,
**dadurch gekennzeichnet, dass** die Vorbestimmung des zusätzlichen Wasservolumens (11), welches als Vorgabe in der Serienproduktion berücksichtigt wird, **dadurch** erfolgt, dass bei einem Proberohr schrittweise ein zusätzliches Wasservolumen (11) eingefüllt wird, bis Veränderungen an dem Proberohr einen vorher festgelegten Grenzwert erreichen.

4. Verfahren nach Anspruch 1, **dadurch gekennzeichnet,**
**dass** das zusätzliche Wasservolumen (11) für einen Zeitraum von 2 bis 3 min in dem Stahlrohr (1) verbleibt.

5. Verfahren nach Anspruch 1, **dadurch gekennzeichnet, dass** das Stahlrohr (1) im Rahmen seiner plastischen Verformung im Außendurchmesser um 2 bis 3 Promille vergrößert wird.

6. Verfahren nach einem der vorangegangenen Ansprüche, **dadurch gekennzeichnet, dass** das Stahlrohr spiralverschweißt ist.

## Claims

1. A method for adjusting specific quality features and/or properties in a steel pipe (1) by means of pressure testing, comprising the following steps:
- pumping water inside the steel pipe (1);
- carrying out a hydrostatic pressure test in accordance with DIN EN 10208 Part 2 with the pumped-in water; and
- pumping a pre-determined additional volume of water (12) into the steel pipe (1) following the hydrostatic pressure test, wherein the steel pipe is slightly stressed in the plastic range.

2. The method according to claim 1, **characterised in that** the steel pipe is suitable for pipe conduits for combustible media.

3. The method according to any of the preceding claims, **characterised in that** the pre-determination of the additional volume of water (11) which is taken into account as an intended value in series production is made by filling an additional water volume (11) stepwise in a sample pipe until changes at the sample pipe reach a previously determined limiting value.

4. The method according to claim 1, **characterised in that** the additional water volume (11) remains in the steel pipe (1) for a period of 2 to 3 min.

5. The method according to claim 1, **characterised in that** the steel pipe (1) is enlarged in its outside diameter by 2 to 3 per mil within the limits of its plastic deformation.

6. The method according to any of the preceding claims, **characterised in that** the steel pipe is spirally welded.

## Revendications

1. Procédé d'ajustage de caractéristiques et/ou propriétés de qualité spécifiques sur un tuyau en acier (1) au moyen d'une vérification de la pression, comprenant les étapes suivantes consistant à :
- pomper de l'eau à l'intérieur du tuyau en acier (1) ;
- effectuer un test de pression hydrostatique selon la norme DIN EN 10208 Partie 2 avec l'eau pompée ; et
- pomper un volume d'eau (12) supplémentaire prédéfini dans le tuyau en acier (1) à la suite du test de pression hydrostatique, moyennant quoi le tuyau en acier est sollicité le moins possible dans la zone plastique.

2. Procédé selon la revendication 1, **caractérisé en ce que**
le tuyau en acier est approprié pour des canalisations prévues pour des milieux inflammables.

3. Procédé selon une des revendications précédentes,
**caractérisé en ce que** la prédéfinition du volume d'eau (11) supplémentaire, dont il est tenu compte comme spécification dans le cadre de la production en série, s'effectue en remplissant par étapes un tuyau de test avec un volume d'eau (11) supplémentaire, jusqu'à ce que des variations sur le tuyau de test atteignent une valeur limite fixée au préalable.

4. Procédé selon la revendication 1, **caractérisé en ce que**
le volume d'eau supplémentaire (11) reste pendant un laps de temps de 2 à 3 minutes dans le tuyau en acier (1).

5. Procédé selon la revendication 1, **caractérisé en ce que** le diamètre externe du tuyau en acier (1) est agrandi dans le cadre de sa déformation plastique de 2 à 3 ‰.

6. Procédé selon une des revendications précédentes, **caractérisé en ce que** le tuyau en acier est soudé en spirale.
